# EUROPEAN PATENT SPECIFICATION

(11) **EP 0 838 323 B1**
(45) Date of publication and mention of the grant of the patent: **11.09.2002**
(21) Application number: 97650045.4
(22) Date of filing: 24.10.1997
(51) Int. Cl.: B29C 49/60, B29C 49/04

(54) **A method of blow-moulding**
Blasformverfahren
Procédé de moulage par soufflage

(30) Priority: 25.10.1996 IE 960750; 18.12.1996 IE 960900
(43) Date of publication of application: 29.04.1998
(73) Proprietor: Menza Limited, County Westmeath (IE)
(72) Inventor: Flood, Nicolas, Mullingar, County Westmeath (IR); Berine, Patrick, County Westmeath (IR)
(74) Representative: O'Brien, John Augustine

(56) References cited:
- FR-A- 1 475 911
- GB-A- 2 275 441
- US-A- 3 571 848
- US-A- 3 973 896
- US-A- 4 025 276
- US-A- 4 799 876

## Description

### Introduction

The invention relates to a method of blow-moulding thermoplastics material to form a blow moulded article such as a case, for example, a tool case comprising two case halves having an integrally moulded hinge therebetween.

It is known to form such blow-moulded articles by firstly extruding a tube or parison of hot thermoplastics material, bringing two halves of a mould together on opposite sides of the parison and inserting a blow pin through the mould into the parison. Air is then blown into the interior of the parison through the blow pin at high pressure to inflate the thermoplastics material against the walls of the mould. After a preset time when the moulding has set, the two halves of the mould are separated and the moulded article is released.

In conventional arrangements, the blow pin which penetrates the wall of the mould comprises a sharpened tip which is normally chamfered. On penetration, the sharpened tip essentially rips through the wall of the parison resulting in a ragged edge through which air may back-leak out from the mould. Because of this, a relatively low moulding pressure of between 3 and 5 bar is generally only achievable using conventional technology. This results in an unsatisfactory surface finish as the air pressure is insufficient to avoid flow wrinkles being visible on the surface of the moulding where distribution of thermoplastics material has been uneven. Further, the small apertures left in the moulding after withdrawal of the blow pins are frequently poorly formed which again detracts from the surface finish of the finished product.

It is known from UK-A-2275441 to blow air at a higher pressure of 10 bar through a blow pin to deform an outer skin of the thermoplastics material as the mould parts are closing. The blow pin is then inserted through the skin and an article such as a case is blow moulded. In this known arrangement the pin has a blunt tip and a tubular sleeve forms around the pin to sleeve the pin as it is operated. This assists in preventing leak-back of air and facilitates higher cycle times with improved surface finish.

US 4,025,276 describes an apparatus for blow moulding hollow articles from a heated parison of plastic.

However, the control of the blow pin during the operation of this systems is sometimes difficult and consequently the blow moulding cycle and surface finish are not fully optimised.

This invention is therefore directed towards providing an improved method of blow moulding which will overcome at least some of these difficulties.

### Statements of Invention

According to the invention there is provided a method of blow-moulding thermoplastics material in a blow moulding apparatus comprising:
a pair of mould halves;
a blow pin having a rounded penetrating tip, the penetrating tip having an air outlet; and
a sleeve in the form of a projection from one of the mould halves;
the blow pin being mounted in the sleeve for movement between a retracted position and an extended penetrating position;
the method comprising the steps of:
extruding a parison of hot thermoplastics material;
partially closing the pair of mould halves around the extruded parison;
applying a localised stress force to a blow-pin receiving area of the wall of a parison as the mould halves are closing;
the localised stress force being applied by engaging the sleeve against the parison and applying air through the outlet hole in the penetrating tip of the blow pin in the retracted position in the sleeve at a low pressure as the mould halves continue to close;
on dosing of the mould halves, moving the blow pin into the projected position and penetrating the pre-stressed area of the parison with the rounded tip of the blow pin;
blowing air at a high pressure through the blow pin when the mould halves are dosed and the parison is penetrated by the blow pin to form an air seal between the parison and the blow pin and to inflate the parison against the walls of the mould halves;
withdrawing the blow pin from the parison; and
releasing a blow-moulded article from the mould after a preset time.

In a particular preferred embodiment of the invention the mould halves are closed in timed relation to the blowing of the low pressure air.

Preferably the wall of the parison is deformed by blowing low pressure air at a pressure of from 3 to 5 bar against the parison.

Preferably the high pressure air at a pressure of from 8 to 10 bar is blown through the blow pin to inflate the parison.

In one embodiment of the invention the low pressure air is blown through a parison-deforming outlet hole at the end of a blowing pin to provide a stream of low pressure air directed against the parison to deform the parison at the point of entry of the blowing pin into the parison. Preferably, after insertion of the blow pin into the parison, the high pressure air is blown through blow pin inflation outlet means in a side wall of the blow pin to inflate the parison against the walls of the mould. Typically the blow pin inflation means comprises at least two outlets in the side wall of the blow pin.

There may be two blow pin inflation outlets which are substantially diametrically opposed in the side wall of the blow pin. Alternatively the blow pin inflation means comprises four outlets spaced-apart around the side wall of the blow pin.

In one embodiment of the invention the parison deforming outlet also provides a blow pin inflation outlet.

In a preferred arrangement the mould halves are closed to a distance of less than 100mm apart before low pressure air is blown against the parison. Preferably the mould halves are closed to a distance of less than 25mm apart before low pressure air is blown against the parison.

In a particularly preferred embodiment the method includes the step of initiating a timer to control the blowing of the low pressure air on partial closing of the mould halves.

The invention also provides a blow moulded article, especially a blow moulded case whenever produced by the method of the invention.

### Detailed Description

The invention will be more clearly understood from the following description thereof, given by way of example only with reference to the accompanying drawings in which:-
Fig. 1 is a diagrammatic cross sectional view of a blow pin used in the method of blow moulding according to the invention;
Figs. 2(a) to 2(f) are diagrammatic side cross sectional views illustration steps in the method of blow moulding of the invention; and
Fig. 3 is a diagrammatic cross sectional view of control apparatus used in the method of the invention.

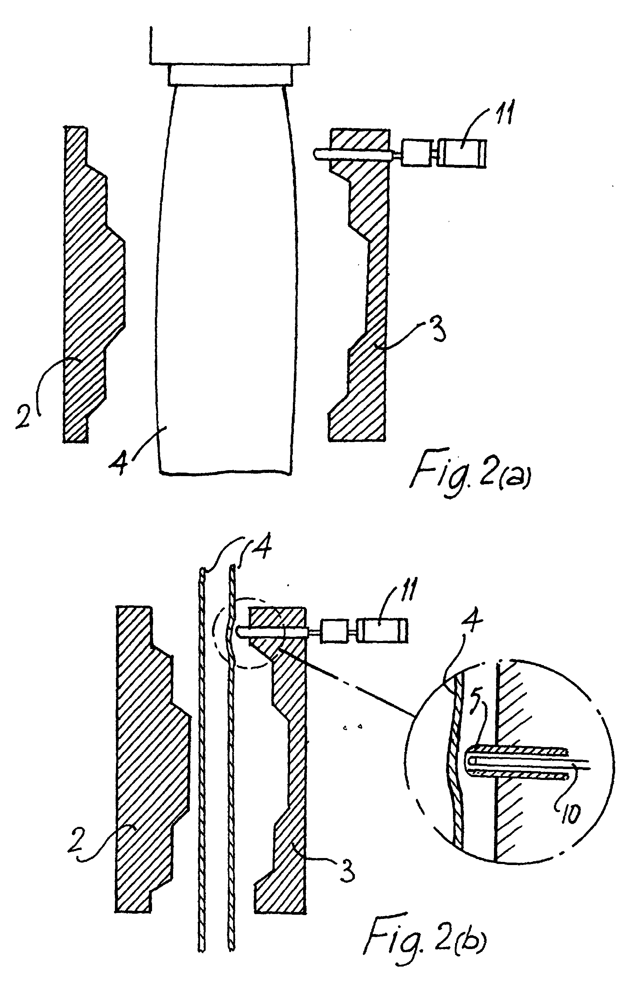

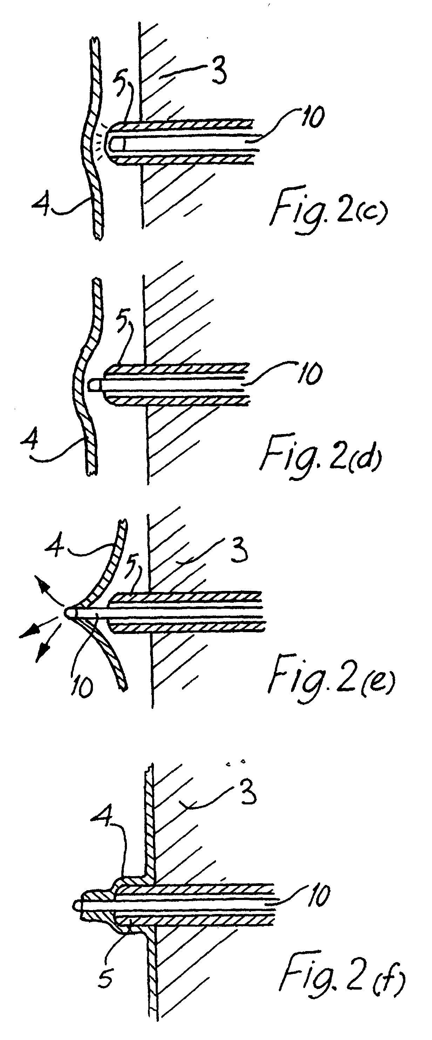

Referring to the drawings, there is illustrated a method of blow-moulding thermoplastics material according to the invention. A blend of thermoplastics material is delivered into a mould 1 comprising two mould halves 2, 3. A parison 4 of hot thermoplastic material is extruded as the mould halves 2, 3 are closed towards one another. A stress force is applied to the wall of the parison 4 in this case by a projection 5 extending from one of the mould halves 3 over which the parison 4 is passed. The stress force is applied in the main body of the article being moulded. The projection 5 defines a sleeve for a blow pin 10 which is movable by a piston 11 from a retracted position as illustrated in Figs. 2(a), 2(b) and 2(c) to extended positions illustrated in Figs. 2(d), 2(e) and 2(f). As the parison 4 flows over the mould half 3, it is pretensioned by the projection or sleeve 5 as illustrated in Fig. 2(b). In this arrangement, the pre-close distance between the mould halves 2, 3 is at most 100mm, and is typically 25mm.

In the method of the invention, after partial closing of the mould halves 2, 3, low pressure air at a pressure of from 3 to 5 bar is blown through the blow pin 10 against the parison 4 as illustrated in Fig. 2(c). The stream of low pressure air deflects the wall of the parison 4. The mould halves 2, continue to close in timed relation to the blowing of the low pressure air and the parison 4 is further pre-shaped as illustrated in Fig. 2(d). The blowing of low pressure air is continued and the blow pin 10 is further extended during further closing of the mould halves 2, 3 until the air and blow pin 10 breaks through the parison 4 as illustrated in Fig. 2(e). Finally, an air seal is formed by blowing high pressure air at a pressure of from 7 to 10 bar through the blow pin 10 as illustrated in Fig. 2(f). In this configuration, the mould halves 2, are fully closed.

After a preset time allowed for the moulded article thus formed to set, the blow moulded article is released from the mould. The article may be a blow moulded case for speciality tools and the like.

The blow pin 10 is operated under the control of a control system illustrated in Fig. 3 and comprising a proximity switch 11 to monitor when the mould halves 2, 3 are in the pre-close position illustrated in Fig. 3, a delay timer 12 and a low pressure solenoid valve 13. A similar control system is provided for high pressure air. The blow pin 10 is mounted in a mounting block 15 having an inlet port 16 for high pressure air at a pressure of typically 8 to 10 bar and for low pressure air at a pressure of typically 3 to 5 bar.

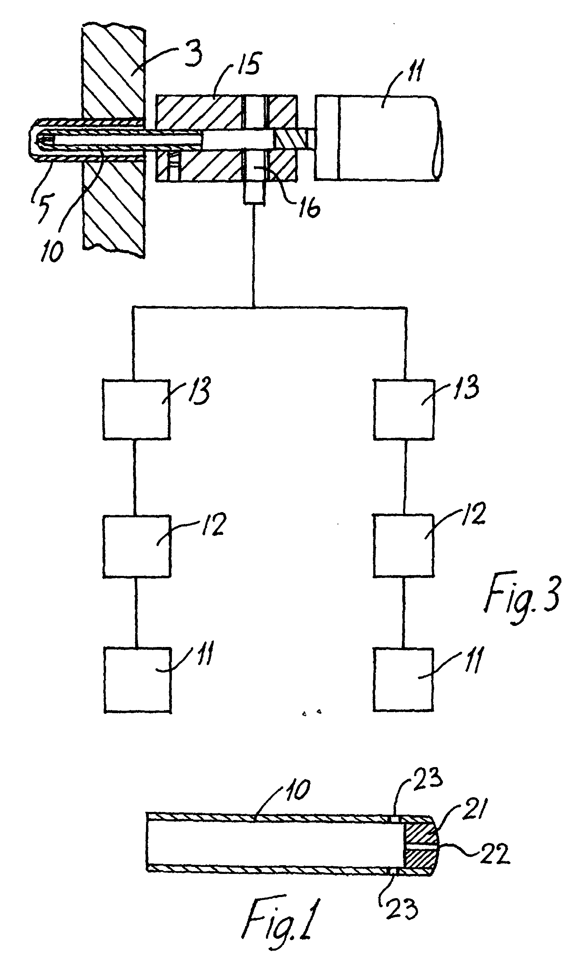

In more detail, and referring particularly to Fig. 1 the blow pin 10 has a rounded tip 21 to prevent damage to a parison 4 on insertion. The tip 21 in this case has a single parison deforming outlet hole 22. Blow pin inflation outlet means is in this case provided by two substantially diametrically opposed blow pin inflation outlet holes 23 in the side wall of the blow pin 10 stepped back from the tip 21 of the pin 10.

It will be appreciated that a stress force may be applied to the wall of the parison either by providing a projection from a mould over which the parison wall passes and/or by blowing air at a low pressure against the parison through a blow pin.

The invention offers very considerable advantages. Because of the lower pressure used, the delayed mould closing, the controlled timing and the modified blow pin it is possible to form blow holes more reliably than by using standard techniques. Lighter walled parisons may be used resulting in materials savings. Different materials which have lower melt strengths may also be used. In addition, production efficiency is optimised as there is no risk of blockages in the blow pin.

A substantially improved surface finish is also achieved. In addition, there is improved contact of the thermoplastics with the mould surface with consequent improved heat transfer and cooling efficiencies which in turn leads to lower cycle times and improved rates of production.

As the quality of the moulded article as produced using the method of the invention is improved there is a lower reject rate on testing, with consequent increase in production.

## Claims

1. A method of blow-moulding thermoplastics material in a blow moulding apparatus comprising:
a pair of mould halves (2,3);
a blow pin (10) having a rounded penetrating tip, the penetrating tip having an air outlet (22); and
a sleeve (5) in the form of a projection (6) from one of the mould halves (2,3);
the blow pin (10) being mounted in the sleeve (5) for movement between a retracted position and an extended penetrating position;
the method comprising the steps of:
extruding a parison (4) of hot thermoplastics material;
partially closing the pair of mould halves (2,3) around the extruded parison (4);
applying a localised stress force to a blow-pin receiving area of the wall of a parison (4) as the mould halves (2,3) are closing;
the localised stress force being applied by engaging the sleeve (5) against the parison (4) and applying air through the outlet hole (22) in the penetrating tip of the blow pin (10) in the retracted position in the sleeve (5) at a low pressure as the mould halves (2,3) continue to close;
on closing of the mould halves (2,3), moving the blow pin (10) into the projected position and penetrating the pre-stressed area of the parison (4) with the rounded tip of the blow pin (10);
blowing air at a high pressure through the blow pin (10) when the mould halves (2,3) are closed and the parison (4) is penetrated by the blow pin (10) to form an air seal between the parison (4) and the blow pin (10) and to inflate the parison (4) against the walls of the mould halves (2,3);
withdrawing the blow pin (10) from the parison (4); and
releasing a blow-moulded article from the mould after a preset time.

2. A method as claimed in claim 1 wherein the mould halves (2,3) are closed in timed relation to the blowing of the low pressure air.

3. A method as claimed in claim 1 or 2 wherein the wall of the parison (4) is deformed by blowing low pressure air at a pressure of from 3 to 5 bar against the parison (4).

4. A method as claimed in any preceding claim wherein high pressure air at a pressure of from 8 to 10 bar is blown through the blow pin (10) to inflate the parison.

5. A method as claimed in any preceding claim wherein after insertion of the blow pin (10) into the parison (4), the high pressure air is blown though blow pin inflation outlet means (23) in a side wall of the blow pin (10) to inflate the parison (4) against the walls of the mould.

6. A method as claimed in claim 5 wherein the blow pin inflation outlet means (23) comprises at least two outlets (23) in the side wall of the blow pin (10).

7. A method as claimed in claim 6 wherein there are two blow pin inflation outlets (23) which are substantially diametrically opposed in the side wall of the blow pin (1).

8. A method as claimed in claim 5 or 6 wherein the blow pin inflation means (23) comprises four outlets (23) spaced-apart around the side wall of the blow pin (10).

9. A method as claimed in any of claims 5 to 8 wherein the parison deforming outlet (22) also provides a blow pin inflation outlet.

10. A method as claimed in any preceding claim wherein the mould halves (2,3) are closed to a distance of less than 100mm apart before low pressure air is blown against the parison (4).

11. A method as claimed in any preceding claim wherein the mould halves (2,3) are closed to a distance of less than 25mm apart before low pressure air is blown against the parison (4).

12. A method as claimed in any preceding claim including the step of initiating a timer to control the blowing of the low pressure air on partial closing of the mould halves (2,3).

## Patentansprüche

1. Verfahren zum Blasformen eines thermoplastischen Materials in einem Blasformgerät, das umfasst:
ein Paar Formhälfte (2, 3);
einen Blasstift (10) mit einer abgerundeten Eindringspitze, wobei die Eindringspitze einen Luftauslass (22) umfasst; und
eine Hülse (5) in Form eines Vorsprungs (6) von einer der Formhälften (2, 3);
wobei der Blasstift (10) in der Hülse (5) für Bewegung zwischen einer zurückgezogenen Position und einer ausgestreckten Eindringungsposition angebracht ist;
wobei das Verfahren die folgenden Schritte umfasst:
Extrudieren eines Rohlings (4) aus heißem thermoplastischem Material;
teilweises Schließen des Paars von Formhälften (2, 3) um den extrudierten Rohling (4);
Ausüben einer lokalen Spannungskraft auf einen Blasstiftaufnahmebereich der Wand eines Rohlings (4), wenn die Formhälften (2, 3) sich schließen;
wobei die lokale Spannungskraft durch Angreifen (5) der Hülse gegen den Rohling (4) und Zuführen von Luft durch das Auslassloch (22) in der Eindringungsspitze des Blasstifts (10) in der zurückgezogenen Position in der Hülse (5) bei einem niedrigen Druck ausgeübt wird, wenn die Formhälften (2, 3) fortfahren, sich zu schließen;
beim Schließen der Formhälften (2, 3), Bewegen des Blasstifts (10) in die vorstehende Position und Eindringen in den vorgespannten Bereich des Rohlings (4) mit der gerundeten Spitze des Blasstifts (10);
Blasen von Luft bei hohem Druck durch den Blasstift (10), wenn die Formhälften (2, 3) geschlossen sind und der Blasstift (10) in den Rohling (4) eingedrungen ist, um eine Luftdichtung zwischen dem Rohling (4) und dem Blasstift (10) zu bilden, und um den Rohling (4) gegen die Wände der Formhälften (2, 3) aufzublasen;
Zurückziehen des Blasstifts (10) aus dem Rohling (4); und
Lösen eines blasgeformten Gegenstands aus der Form nach einer vorgegebenen Zeit.

2. Verfahren nach einem der Ansprüche 2 bis 4 [sic], bei dem die Formhälften (2, 3) in zeitgesteuertem Verhältnis zu dem Einblasen der Niederdruckluft geschlossen werden.

3. Verfahren nach Anspruch 1 oder 2, bei dem die Wand des Rohlings (4) durch Blasen von Niederdruckluft bei einem Druck von 3 bis 5 Bar gegen den Rohling (4) verformt wird.

4. Verfahren nach einem vorhergehenden Anspruch, bei dem Hochdruckluft bei einem Druck von 8 bis 10 Bar durch den Blasstift (10) zum Aufblasen des Rohlings geblasen wird.

5. Verfahren nach einem vorhergehenden Anspruch, bei dem nach Einführung des Blasstifts (10) in den Rohling (4) die Hochdruckluft durch ein Blasstift-Aufblasauslassmittel (23) in einer Seitenwand des Blasstiftes (10) zum Aufblasen des Rohlings (4) gegen die Wände der Form geblasen wird.

6. Verfahren nach Anspruch 5, bei dem das Blasstift-Aufblasauslassmittel (23) wenigstens zwei Auslasse (23) in der Seitenwand des Blasstiftes (10) aufweist.

7. Verfahren nach Anspruch 6, bei dem zwei Blasstift-Aufblasauslasse (23) vorhanden sind, die sich im wesentlichen diametral in der Seitenwand des Blasstiftes (1) gegenüberliegen.

8. Verfahren nach Anspruch 5 oder 6, bei dem das Blasstift-Aufblasmittel (23) vier Auslasse (23) im Abstand verteilt um die Seitenwand des Blasstiftes (10) aufweist.

9. Verfahren nach einem der Ansprüche 5 bis 8, bei dem der Rohlingverformungsauslass (22) auch einen Blasstiftaufblasauslass bereitstellt.

10. Verfahren nach einem vorhergehenden Anspruch, bei dem die Formhälften (2, 3) auf einen Abstand von weniger als 100 mm voneinander entfernt geschlossen werden, bevor Niederdruckluft gegen den Rohling (4) geblasen wird.

11. Verfahren nach einem vorhergehenden Anspruch, bei dem die Formhälften (2, 3) auf einen Abstand von weniger als 25 mm voneinander entfernt geschlossen werden, bevor Niederdruckluft gegen den Rohling (4) geblasen wird.

12. Verfahren nach einem vorhergehenden Anspruch, das den Schritt umfasst, eine Zeitsteuerung zum Steuern des Blasens der Niederdruckluft beim teilweisen Schließen der Formhälften (2, 3) zu initiieren.

## Revendications

1. Procédé d'extrusion-soufflage de matières thermoplastiques dans un dispositif d'extrusion-soufflage comprenant :
une paire de moitiés de moule (2, 3) ;
une tige de soufflage (10) ayant une pointe arrondie pénétrante, la pointe pénétrante ayant une sortie d'air (22) ; et
un manchon (5) ayant la forme d'une saillie (6) depuis l'une des moitiés de moule (2, 3) ;
la tige de soufflage (10) étant montée dans le manchon (5) en vue de se déplacer
entre une position rétractée et une position pénétrante déployée ;
le procédé comprenant les étapes de :
extrusion d'une ébauche (4) de matière thermoplastique chaude ;
fermeture partielle de la paire de moitiés de moule (2, 3) autour de l'ébauche extrudée (4) ;
application d'une force de contrainte localisée sur une aire de réception de tige de soufflage de la paroi d'une ébauche (4) comme les moitiés de moule (2, 3) se ferment ;
la force de contrainte localisée étant appliquée en engageant le manchon (5) contre l'ébauche (4) et en appliquant de l'air à travers le trou de sortie (22) dans
la pointe pénétrante de la tige de soufflage (10) dans la position rétractée dans le manchon (5) à une basse pression comme les moitiés de moule (2, 3) continuent de se fermer ;
lors de la fermeture des moitiés de moule (2, 3), déplacement de la tige de soufflage (10) dans la position déployée et pénétration de l'aire pré-contrainte de l'ébauche (4) avec la pointe arrondie de la tige de soufflage (10) ;
soufflage d'air à une haute pression à travers la tige de soufflage (10) quand les moitiés de moule (2, 3) sont fermées et l'ébauche (4) est pénétrée par la tige de soufflage (10) en vue de former un joint étanche à l'air entre l'ébauche (4) et la tige de soufflage (10) et de gonfler l'ébauche (4) contre les parois des moitiés de moule (2, 3) ;
retrait de la tige de soufflage (10) de l'ébauche (4) ; et
libération d'un article extrudé par soufflage du moule après un temps préétabli.

2. Procédé selon l'une quelconque des revendications 2 à 4 [sic], dans lequel les moitiés de moule (2, 3) sont fermées selon une relation minutée avec le soufflage de l'air à basse pression.

3. Procédé selon la revendication 1 ou 2, dans lequel la paroi de l'ébauche (4) est déformée par soufflage d'air à basse pression à une pression de 3 à 5 bars contre l'ébauche (4).

4. Procédé selon l'une quelconque des revendications précédentes, dans lequel de l'air à haute pression à une pression de 8 à 10 bars est soufflé à travers la tige de soufflage (10) pour gonfler l'ébauche.

5. Procédé selon l'une quelconque des revendications précédentes, dans lequel après l'insertion de la tige de soufflage (10) dans l'ébauche (4), de l'air à haute pression est soufflé à travers un moyen de sortie de gonflage de tige de soufflage (23) dans une paroi latérale de la tige de soufflage (10) afin de gonfler l'ébauche (4) contre les parois du moule.

6. Procédé selon la revendication 5, dans lequel le moyen de sortie de gonflage de tige de soufflage (23) comprend au moins deux sorties (23) dans la paroi latérale de la tige de soufflage (10).

7. Procédé selon la revendication 6, dans lequel existent deux sorties de gonflage de tige de soufflage (23) qui sont substantiellement diamétralement opposées dans la paroi latérale de la tige de soufflage (1).

8. Procédé selon la revendication 5 ou 6, dans lequel le moyen de gonflage de tige de soufflage (23) comprend quatre sorties (23) espacées autour de la paroi latérale de la tige de soufflage (10).

9. Procédé selon l'une quelconque des revendications 5 à 8, dans lequel la sortie de déformation d'ébauche (22) fournit aussi une sortie de gonflage de tige de soufflage.

10. Procédé selon l'une quelconque des revendications précédentes, dans lequel les moitiés de moule (2, 3) sont fermées à une distance de moins de 100 mm l'une de l'autre avant que l'air à basse pression ne soit soufflé contre l'ébauche (4).

11. Procédé selon l'une quelconque des revendications précédentes, dans lequel les moitiés de moule (2, 3) sont fermées à une distance de moins de 25 mm l'une de l'autre avant que l'air à basse pression ne soit soufflé contre l'ébauche (4).

12. Procédé selon l'une quelconque des revendications précédentes, comportant l'étape de lancement d'une minuterie pour commander le soufflage de l'air à basse pression lors de la fermeture partielle des moitiés de moule (2, 3).
